# EUROPÄISCHE PATENTSCHRIFT

(11) **EP 2 863 604 B1**
(45) Veröffentlichungstag und Bekanntmachung des Hinweises auf die Patenterteilung: **19.08.2020**
(21) Anmeldenummer: 14003518.9
(22) Anmeldetag: 14.10.2014
(51) Int. Cl.: G06F 21/62, H04L 29/08, H04W 4/029

(54) **ORTSBEZOGENER DIENST**
LOCATION-RELATED SERVICE
SERVICE RELATIF À UN ENDROIT

(30) Priorität: 15.10.2013 DE 102013017102
(43) Veröffentlichungstag der Anmeldung: 22.04.2015
(73) Patentinhaber: Giesecke+Devrient Mobile Security GmbH, 81677 München (DE)
(72) Erfinder: Stocker, Thomas, 81739 München (DE)

(56) Entgegenhaltungen:
- US-A1- 2010 064 373
- GE ZHONG ET AL: "A distributed k-anonymity protocol for location privacy", PERVASIVE COMPUTING AND COMMUNICATIONS, 2009. PERCOM 2009. IEEE INTERNATIONAL CONFERENCE ON, IEEE, PISCATAWAY, NJ, USA, 9. März 2009 (2009-03-09), Seiten 1-10, XP031453119, ISBN: 978-1-4244-3304-9
- GKOULALAS-DIVANIS A ET AL: "PLOT: Privacy in Location Based Services: An Open-Ended Toolbox", MOBILE DATA MANAGEMENT: SYSTEMS, SERVICES AND MIDDLEWARE, 2009. MDM '09. TENTH INTERNATIONAL CONFERENCE ON, IEEE, PISCATAWAY, NJ, USA, 18. Mai 2009 (2009-05-18), Seiten 62-71, XP031476807, ISBN: 978-1-4244-4153-2
- LINDA PARESCHI ET AL: "Composition and Generalization of Context Data for Privacy Preservation", PERVASIVE COMPUTING AND COMMUNICATIONS, 2008. PERCOM 2008. SIXTH ANNUAL IEEE INTERNATIONAL CONFERENCE ON, IEEE, PISCATAWAY, NJ, USA, 17 March 2008 (2008-03-17), pages 429-433, XP031250420, ISBN: 978-0-7695-3113-7

## Beschreibung

Die vorliegende Erfindung betrifft ein Verfahren zum Bereitstellen von Antwortdaten im Rahmen eines ortsbezogenen Dienstes, sowie ein System, umfassend ein Anfrageverarbeitungssystem zum Verarbeiten von Anfragen, zumindest ein mobiles Endgerät zum Stellen der Anfragen, sowie eine dritte Instanz zum Weiterleiten und Bearbeiten von Anfragen und Antwortdaten.

Im Rahmen eines ortsbezogenen Dienstes werden auf Basis bereitgestellter Orts- und Angebotsanfrageinformationen auf eine Anfrage nach einem bestimmten Angebot in einem vorgegebenen Ortsbereich Antwortdaten ausgegeben, die ein auf die Anfrage passendes Angebot bezeichnen. Ein solcher ortsbezogener Dienst könnte beispielsweise einem Nutzer, auf Basis einer Wunschliste des Nutzers, in welcher Einkaufswünsche eingetragen sind, die bestimmte Produkte oder Dienstleistungen beschreiben, immer dann über ein Angebot informieren, welches auf die Anfrage passt, wenn sich der Nutzer in der Nähe eines entsprechenden Dienstleistungserbringers aufhält, beispielsweise in der Nähe eines Ladens, welcher ein angefragtes Produkt zum angefragten Preis bereithält. Mannigfaltige ähnliche Anwendungsszenarien sind vorstellbar. Angebotsanbieter können weiterhin beispielsweise Restaurants, Tankstellen, Kinos und dergleichen sein.

Für den Nutzer nachteilhaft an einem solchen Dienst ist die Tatsache, dass der Betreiber des ortsbezogenen Dienstes, solange keine diesbezüglichen Schutzvorkehrungen getroffen sind, ein sehr genaues Profil des Anfragestellers erstellen kann, nämlich auf Basis der dem Dienst zur Verfügung gestellten Daten. Einmal gibt der Anfragesteller durch seine Wunschliste seine Präferenzen hinsichtlich bevorzugter Produkte und/oder Dienstleistungen preis. Zum anderen kann der Anfragesteller kaum verhindern, dass der Betreiber des Dienstes ein genaues Bewegungsprofil des Anfragestellers erstellt, da, um dem Betreiber des Dienstes zu ermöglichen, jeweils passende Angebote in der Nähe des momentanen Aufenthaltsorts des Anfragestellers anbieten zu können, jeweils aktuelle Positionsdaten übermittelt werden müssen.

Im Artikel "A distributed k-anonymity protocol for location privacy" von GE ZHONG ET AL und im Artikel "Composition and Generalization of Context Data for Privacy Preservation" von LINDA PARESCHI ET AL werden Anonymisierer beschrieben wo der Standort einer Person so getarnt wird, dass ein nur einen Ortsbereich, welches die Position der Person beinhaltet, einem ortsbezogenen Dienst angezeigt wird und nicht die Position der Person.

Aufgabe der vorliegenden Erfindung ist es demnach, ein Verfahren zum Bereitstellen von Antwortdaten im Rahmen eines ortsbezogenen Dienstes vorzuschlagen, welches gleichzeitig erlaubt, die Privatsphäre des Anfragestellers so gut wie möglich schützen. D.h. es soll dem Betreiber des ortsbezogenen Dienstes im Wesentlichen unmöglich gemacht werden, auf Basis der ihm vom Anfragesteller bereitgestellten Daten ein Nutzerprofil des Anfragestellers zu erstellen.

Diese Aufgabe wird durch den Gegenstand der unabhängigen Ansprüche gelöst. Vorteilhafte Ausgestaltungen und Weiterbildungen sind in den abhängigen Ansprüchen angegeben.

Bei einem Verfahren zum Bereitstellen von Antwortdaten im Rahmen eines ortsbezogenen Dienstes sendet ein Anfragesteller eine mittels einer Anfrageinformation definierbare Anfrage an einen Anfrageempfänger, das heißt an den ortsbezogenen Dienst.

Der Anfrageempfänger stellt in Antwort auf die Anfrage hinsichtlich der Anfrageinformation passende Antwortdaten bereit. Dabei wird die Anfrage durch Detailanfrageinformationen definiert. Die Detailanfrageinformation umfasst dabei zumindest eine Ortsanfrageinformation und eine Angebotsanfrageinformation.

Globalanfrageinformationen werden, ausgehend von den Detailanfrageinformationen, derart gebildet, dass die Globalanfrageinformationen die Detailanfrageinformationen umfassen. Die Globalanfrageinformationen umfassen eine die Ortsanfrageinformation umfassende verallgemeinerte Ortsanfrageinformation.

Insbesondere kann von den Globalanfrageinformationen nicht auf die Detailanfrageinformationen geschlossen werden, das heißt mittels der Globalanfrageinformationen werden die Detailanfrageinformationen in gewisser Weise verschleiert, um die Anfrage zu anonymisieren.

Die Globalanfrageinformationen werden dann als Anfrageinformation an den Anfrageempfänger gesendet.

Der Anfrageempfänger verarbeitet die empfangenen Anfrageinformationen und erzeugt entsprechende Antwortdaten, welche auf die Anfrage zutreffende Ergebnisse umfassen.

Diese Antwortdaten werden schließlich hinsichtlich Relevanz für die Detailanfrageinformationen ausgewertet.

Gemäß einer bevorzugten Ausführungsform wird die verallgemeinerte Ortsanfrageinformation von einer dritten Instanz erzeugt. Diese dritte Instanz bildet gemäß der bevorzugten Ausführungsform ein Betreiber eines Mobilfunknetzes, über welches eine Datenkommunikation zwischen dem Anfragesteller und dem Anfrageempfänger zumindest teilweise durchgeführt wird. Weiterhin wird gemäß dieser bevorzugten Ausführungsform die Angebotsanfrageinformation derart von dem Anfragesteller an den Anfrageempfänger übertragen, dass die dritte Instanz dem Anfragesteller keine Angebotsanfrageinformation eindeutig zuordnen kann.

Das Bilden von Globalanfrageinformationen und das Bereitstellen dieser Globalanfrageinformationen, anstelle der Detailanfrageinformationen, an den Anfrageempfänger, hat den Vorteil, dass der Anfrageempfänger grundsätzlich kein Nutzerprofil des Anfragestellers erzeugen kann. Die Globalanfrageinformationen verschleiern in gewünschter Weise konkrete Nutzerdaten, wie dies nachfolgend noch exemplarisch ausgeführt wird.

Ein Dazwischenschalten einer dritten Instanz zwischen den Anfragesteller und den Anfrageempfänger hat überdies den Vorteil, dass die dritte Instanz zumindest einen Anteil der Antwortdaten auswerten kann. Das Bilden der Globalanfrageinformationen, welche die Detailanfrageinformationen umfassen, hat die Konsequenz, dass die von dem Anfrageempfänger erzeugten Antwortdaten Ergebnisse umfassen, die auf die ursprüngliche Anfrage, welche durch die Detailanfrageinformationen definiert ist, nicht mehr zutreffen. Als Folge kann das Datenvolumen, welches durch die Antwortdaten gebildet wird, beträchtlich sein. Da zumindest ein Teil der Datenkommunikation zwischen dem Anfragesteller und dem Anfrageempfänger in der Regel über ein Mobilfunknetz durchgeführt werden wird, wäre es für den Anfragesteller nachteilhaft, derart große Datenmengen über das Mobilfunknetz empfangen zu müssen.

Gemäß der bevorzugten Ausführungsform des Verfahrens können die von dem Anfrageempfänger erzeugten Antwortdaten der dritten Instanz, d.h. dem Betreiber des Mobilfunknetzes, über ein Kommunikationsnetzwerk übermittelt werden, welches eine schnelle und kostengünstige Übertragung großer Datenmengen erlaubt, insbesondere über das Internet. Lediglich die Datenkommunikation zwischen dem Betreiber des Mobilfunknetzes und dem Anfragesteller müsste dann noch über ein Mobilfunknetz durchgeführt werden. Dadurch, dass die dritte Instanz einen Großteil der Antwortdaten bereits hinsichtlich Relevanz für die Detailanfrageinformationen auswerten kann, ist das Datenvolumen, welches die tatsächlichen Ergebnisse, d.h. die Antwortdaten, welche hinsichtlich der Detailanfrageinformationen relevant sind, und welche von der dritten Instanz über das Mobilfunknetz an den Anfragesteller noch zu übertragen sind, eher gering.

Da der Betreiber des Mobilfunknetzes, welcher als dritte Instanz dient, ohnehin in der Lage ist, ein Profil des Anfragestellers hinsichtlich seiner momentanen Position aufzustellen, kann dem Betreiber des Mobilfunknetzes gleichzeitig die Aufgabe zugewiesen werden, eine Verschleierung der Ortsanfrageinformationen durchzuführen. Konkrete Arten der Verschleierung werden nachstehend genauer beschrieben. Der Betreiber des Mobilfunknetzwerks kann dann gleichzeitig die entsprechenden Antwortdaten, welche der Anfrageempfänger, d.h. der ortsbezogene Dienst, liefert, auswerten.

Dem Anfrageempfänger ist es grundsätzlich nicht möglich, ein vollständiges Profil eines Anfragestellers zu erzeugen, da er zumindest hinsichtlich der Ortsanfrage lediglich verallgemeinerte Ortsanfrageinformation von der dritten Instanz empfängt, entsprechend kein Bewegungsprofil des Anfragestellers erzeugen kann.

Auf der anderen Seite ist es dem Betreiber des Mobilfunknetzes, welcher als dritte Instanz die verallgemeinerte Ortsanfrageinformation erzeugt - welchem folglich detaillierte Ortsanfrageinformationen vorliegen, die zum Erstellen eines Bewegungsprofils geeignet sind -, nicht möglich, ein solches Profil auch hinsichtlich der Angebotsanfrageinformationen zu erstellen, da Angebotsanfrageinformationen dem Betreiber gemäß der bevorzugten Ausführungsform lediglich in einer Form bereitgestellt werden, welche es nicht erlaubt, ein entsprechendes Nutzerprofil zu erzeugen, da Angebotsanfrageinformationen in einer Form bereitgestellt werden, welche eine eindeutige Zuordnung zu einem Anfragesteller nicht erlauben.

Folglich kann weder der Anfrageempfänger noch die dritte Instanz ein vollständiges Profil des Anfragestellers erzeugen.

Gemäß einer ersten Variante der beschriebenen bevorzugten Ausführungsform kann die dritte Instanz, d.h. der Betreiber des Mobilfunknetzes, dem Anfragesteller deshalb keine Angebotsanfrageinformation eindeutig zuordnen, da der Anfragesteller die Angebotsanfrageinformation in verschlüsselter, lediglich für den Anfrageempfänger, nicht aber für die dritte Instanz entschlüsselbarer Form an die dritte Instanz überträgt.

Gemäß dieser Variante leitet die dritte Instanz die verschlüsselten Angebotsanfrageinformationen unverändert an den Anfrageempfänger weiter. Dieser ist dementsprechend eingerichtet, die verschlüsselten Angebotsanfrageinformationen zu entschlüsseln, um entsprechende Antwortdaten erzeugen zu können.

Vorzugsweise ist gemäß dieser Variante der Anfrageempfänger eingerichtet, die Angebotsanfrageinformation betreffende Anteile der Antwortdaten wieder zu verschlüsseln und der dritten Instanz lediglich in verschlüsselter Form bereitzustellen. Die Verschlüsselung ist derart ausgebildet, dass die dritte Instanz die verschlüsselten Antwortdaten nicht entschlüsseln kann, sondern lediglich der Anfragesteller, den diese Antwortdaten betreffen. Die dritte Instanz leitet dann die Antwortdaten in verschlüsselter Form, gegebenenfalls nach Auswertung der dazugehörigen ortsbezogenen Antwortdatenanteile, die nicht verschlüsselt sind, an den Anfragesteller weiter. Dieser kann dann die verschlüsselten Antwortdaten entschlüsseln und gegebenenfalls weiter auswerten, d.h. mit Bezug auf die Angebotsanfrageinformationen. Auf diese Weise kann die dritte Instanz auch anhand der Antwortdatenanteile, die sich auf die Angebotsanfrageinformation beziehen, keine Rückschlüsse auf die konkreten Produkt- oder Dienstleistungswünsche des Anfragestellers ziehen.

Die genannte Verschlüsselung kann dabei einerseits auf einem bekannten asymmetrischen Verschlüsselungssystem beruhen. Andererseits können Anfragesteller und Anfrageempfänger auch vorab einen symmetrischen Schlüssel austauschen.

Gemäß einer zweiten Variante der bevorzugten Ausführungsform umfassen die Globalanfrageinformationen eine die Angebotsanfrageinformation umfassende, verallgemeinerte Angebotsanfrageinformation. Die dritte Instanz kann gemäß dieser Variante dem Anfragesteller deshalb keine Angebotsanfrageinformation eindeutig zuordnen, weil die verallgemeinerte Angebotsanfrageinformation von dem Anfragesteller selbst erzeugt und an die dritte Instanz übertragen wird. Mit anderen Worten verschleiert der Anfragesteller selbst seine Detailanfrageinformation hinsichtlich der Angebotsanfrageinformationen. Dementsprechend wird der Anfragesteller die diesbezüglichen Antwortdatenanteile auch selbst auswerten.

In der Regel wird die Detailanfrageinformation stets durch den Anfragesteller erzeugt.

Wie bereits erwähnt, definieren die Detailanfrageinformationen die Anfrage. Eine Anfrage im Rahmen eines ortsbezogenen Dienstes umfasst, wie ebenfalls bereits angedeutet, zumindest zwei Arten von die Anfrage definierenden Informationen. Dies sind einmal Ortsanfrageinformationen, welche die Anfrage örtlich definieren. Zum anderen umfasst eine Anfrage Angebotsanfrageinformationen, welche die Anfrage hinsichtlich des nachgefragten Produkts oder der nachgefragten Dienstleistung genauer spezifizieren.

Dementsprechend verwendet der Anfrageempfänger, um auf die Anfrage zutreffende Antwortdaten zu erzeugen, dem Anfrageempfänger vorliegende Ortsinformationen und Angebotsinformationen. Diese Informationen geben an, an welchen Stellen welche Angebote vorliegen. In der Regel werden solche Ortsinformationen und Angebotsinformationen von einzelnen lokalen Angebotsanbietern erzeugt und dem Anfrageempfänger, d.h. dem ortsbezogenen Dienst, bereitgestellt. Der Anfrageempfänger kann diese Informationen geeignet aufbereiten und beispielsweise eine Ortsinformations- und eine Angebotsinformationsdatenbank aufbauen. Aus den derart aufbereiteten Informationen erzeugt der Anfrageempfänger dann die Antwortdaten, indem sämtliche Angebote herausgefiltert werden, welche auf die Anfrage gemäß den Globalanfrageinformationen zutreffen, d.h. welche örtlich den Ortsanfrageinformationen entsprechen, beispielsweise innerhalb eines vorgegebenen Ortsbereichs angesiedelt sind, und welche einem im Rahmen der Angebotsanfrageinformation definierten Produkt entsprechen.

Wie angedeutet, umfasst die Detailanfrageinformation in der Regel eine Ortsanfrageinformation. Entsprechend umfassen die erzeugten Globalanfrageinformationen eine die Ortsanfrageinformation umfassende, verallgemeinerte Ortsanfrageinformation.

Als Ortsanfrageinformation kann insbesondere eine momentane Position des Anfragestellers vorliegen. Eine solche Position kann in bekannter Weise mittels eines gewöhnlichen Lokalisationsdienstes, beispielsweise auf der Basis von GPS, WLAN, oder dergleichen erzeugt werden. Der Anfragesteller wird sich dazu in der Regel eines mobilen Endgerätes, beispielsweise eines Smartphones, bedienen. Als verallgemeinerte Ortsanfrageinformation kann in diesem Szenario ein die Position umfassender Ortsbereich, das heißt eine Zone, gebildet werden, in der die momentane Position des Anfragestellers liegt. Hinsichtlich der genauen Vorschrift, wie eine solche Zone gebildet wird, wie sie geformt ist, wie entsprechende Zonen aneinandergrenzen, sich überlappen, und dergleichen, sind zahlreiche Varianten denkbar. Insbesondere können die Ortsbereiche oder Zonen von gleicher oder von verschiedener Größe sein. Zonen können aneinander angrenzen oder sich auch überlappen. Die Zonen können die Form von Mobilfunkzellen annehmen oder auf Basis von Koordinaten gebildet werden, welche z.B. satellitenbasiert erhalten werden.

Es versteht sich, dass eine Verschleierung einer Position des Anfragestellers umso besser gelingt, je größer der Ortsbereich gewählt wird, der die momentane Position des Anfragestellers umfasst. Entsprechend umfangreicher werden dann allerdings auch die von dem Anfrageempfänger bereitgestellten Antwortdaten, da diese sämtliche Ergebnisse umfassen, die räumlich in dem Ortsbereich angesiedelt sind.

Wenn als Ortsanfrageinformation, das heißt als ein Teil der Detailanfrageinformation, eine momentane Position des Anfragestellers vorliegt, kann die verallgemeinerte Ortsanfrageinformation zusätzlich zu der momentanen Position des Anfragestellers weitere momentane Positionen anderer, von dem Anfragesteller verschiedener Anfragesteller umfassen. Mit anderen Worten wird dem Anfrageempfänger nicht eine Position als Globalanfrageinformation übermittelt, sondern momentane Positionen einer Gruppe von Anfragestellern.

Eine solche Ausführungsform ist insbesondere dann anwendbar, wenn die dritte Instanz nicht lediglich von einem Anfragesteller verwendet wird, sondern einer Gruppe von Anfragestellern als dritte Instanz dient, wie dies gemäß der vorstehend beschriebenen bevorzugten Ausführungsform der Fall ist, wenn nämlich der Betreiber eines Mobilfunknetzes als dritte Instanz dient. Eine Anonymisierung der Anfrage hinsichtlich der Ortsanfrageinformation kann auf diese Weise erreicht werden, denn der Anfrageempfänger kann nicht ermitteln, welche Position der Gruppe von Positionen welchem Anfragesteller zuzuordnen ist.

Wie erwähnt, können die Detailanfrageinformationen eine Angebotsanfrageinformation umfassen, die ein angefragtes Angebot spezifiziert. Das heißt die Angebotsanfrageinformation spezifiziert ein Produkt oder eine Dienstleistung, welche der Anfragesteller nachfragt. Weitere, durch die Angebotsanfrageinformation spezifizierte Parameter können beispielsweise der Preis eines Produkts oder dergleichen sein. Die Angebotsanfrageinformation kann beispielsweise in Form eines Schlüsselwortes vorliegen.

Die Globalanfrageinformation wird in diesem Fall eine die Angebotsanfrageinformation umfassende verallgemeinerte Angebotsanfrageinformation umfassen. Im einfachsten Fall könnte die Globalanfrageinformation beispielsweise eine Mehrzahl von Schlüsselwörtern umfassen, welche dasjenige Schlüsselwort umfasst, welches der Angebotsanfrageinformation entspricht. Gemäß einer ersten Variante, in der die Angebotsanfrageinformation in Form eines Angebotsanfrageschlüsselwortes vorliegt, kann die verallgemeinerte Angebotsanfrageinformation in Form eines Schlüsselwortes gebildet werden, welches einen Oberbegriff des Angebotsanfrageschlüsselwortes darstellt. Wenn also der Anfragesteller beispielsweise eine Anfrage mit dem Schlüsselwort "Vollkornbrot" stellt, könnte die Globalanfrageinformation in diesem Fall eine verallgemeinerte Angebotsanfrageinformationen in Form des Schlüsselwortes "Backwaren" umfassen.

Wie bereits erwähnt, kann in dem Fall, dass die Angebotsanfrageinformation in Form eines Angebotsanfrageschlüsselwortes vorliegt, die verallgemeinerte Angebotsanfrageinformation eine Mehrzahl von Anfrageschlüsselwörtern enthalten. Diese Anfrageschlüsselwörter müssen inhaltlich nicht zu dem ursprünglichen Angebotsanfrageschlüsselwort passen, sondern können beliebige Artikel oder Dienstleistungen betreffen. Die Anzahl der zusätzlichen Schlüsselwörter, welche die verallgemeinerte Angebotsanfrageinformation ausmachen, ist variabel.

Ähnlich wie bereits mit Bezug auf die verallgemeinerte Ortsanfrageinformation beschrieben, kann auch im Zusammenhang mit der verallgemeinerten Angebotsanfrageinformation die verschiedene Anzahl von Anfrageschlüsselwörtern, welche dem ursprünglichen Angebotsanfrageschlüsselwort zum Bilden der verallgemeinerten Angebotsanfrageinformation hinzugefügt werden, aus Anfrageschlüsselwörtern anderer, von dem Anfragesteller verschiedener Anfragesteller entsprechen.

Eine einfache Art der Anonymisierung - mit Bezug auf den Anfrageempfänger - kann somit beispielsweise derart erfolgen, dass eine dritte Instanz, wie z.B. der Betreiber des Mobilfunknetzes, von einer Gruppe von Anfragestellern als dritte Instanz verwendet wird, wobei die Anfragesteller jeweils ihre Detailanfrageinformationen an die dritte Instanz übertragen. Die dritte Instanz bildet dann eine Globalanfrageinformation, indem die spezifischen Ortsanfrageinformationen der Gruppe von Anfragestellern zu einer verallgemeinerten Ortsanfrageinformation zusammengefasst werden. In gleicher Weise werden die von den verschiedenen Anfragestellern empfangenen Angebotsanfrageinformationen zu einer Gruppe von Angebotsanfrageinformationen zusammengefasst, welche dann eine verallgemeinerte Angebotsanfrageinformation bilden. Derart erzeugte Globalanfrageinformationen werden dann von der dritten Instanz an den Anfrageempfänger gesendet. Die von dem Anfrageempfänger empfangenen Antwortdaten werden dann von der dritten Instanz in geeigneter Weise ausgewertet. Jeder Anfragesteller empfängt dann von der dritten Instanz die auf ihn zutreffenden Antwortdaten.

Wie bereits eingangs mit Bezug auf die bevorzugte Ausführungsform des Verfahrens beschrieben, kann ein Anfragesteller dem Betreiber des Mobilfunknetzes die Angebotsanfrageinformationen verschlüsselt oder durch Verallgemeinerung verschleiert bereitstellen, um zu verhindern, dass der Betreiber ein Profil des Anfragestellers hinsichtlich dessen Produkt- und Dienstleistungswünschen erstellen kann.

Gemäß einer weiteren bevorzugten Variante kann eine verallgemeinerte Angebotsanfrageinformation eine Anfragezeichenkette umfassen, welche aus einer Anwendung einer mathematischen Funktion, vorzugsweise einer Einwegfunktion, auf ein Angebotsanfrageschlüsselwort, welches die entsprechende Detailanfrageinformation bildet, abgeleitet werden kann. Gemäß dieser Variante ist darauf zu achten, dass das Angebotsanfrageschlüsselwort in einer vorgegebenen, normierten Form vorliegt. Da das Bilden der Zeichenkette mittels Anwendung der mathematischen Funktion unterschiedliche Zeichenketten bildet, wenn beispielsweise Groß- und Kleinschreibung, Singular und Plural oder dergleichen nicht einheitlich verwendet werden, ist in diesen Fällen eine Normierung notwendig, beispielsweise, indem Schlüsselwörter stets groß geschrieben werden und im Singular zu verwendet sind und zusätzlich auf Umlaute (ä, ö, ü) und sonstige Sonderzeichen verzichtet wird.

Unter einer mathematischen Einwegfunktion wird im Rahmen der vorliegenden Erfindung zum einen eine mathematische Funktion verstanden, welche, zumindest nach derzeitigem Stand des Wissens, einfach anzuwenden, d.h. zu berechnen ist, jedoch praktisch, das heißt mit einem gewöhnlichen Angreifer zur Verfügung stehenden Ressourcen, nicht umkehrbar ist. Ein Beispiel einer solchen Einwegfunktion sind beispielsweise bekannte Hash-funktion. Zum anderen kann auch eine solche Funktion als Einwegfunktion verstanden werden, welche nicht injektiv ist, d.h. welche gegebenenfalls verschiedene Schlüsselwörter auf ein und derselben Zeichenkette abbildet. Beispiele solcher Funktionen sind z.B. Prüfsummen.

Die mathematische Funktion kann dabei, wie erwähnt, derart ausgebildet sein, dass verschiedene Anfrageschlüsselwörter auf dieselbe Zeichenkette abgebildet werden. Auf diese Weise kann bereits eine Art der Anonymisierung erfolgen, da seitens des Anfrageempfängers von der empfangenen Zeichenkette nicht mehr eindeutig auf das ursprüngliche Angebotsanfrageschlüsselwort rückgeschlossen werden kann.

Anstelle der Anfragezeichenkette selbst, kann lediglich ein vorgegebener Anteil der gebildeten Zeichenkette als Anfragezeichenkette verwendet werden, beispielsweise lediglich ein Anfangsabschnitt, ein Endabschnitt, oder dergleichen. Die Länge des als Anfragezeichenkette verwendeten Anteils der Zeichenkette kann dabei variabel gewählt werden. Je kürzer der Anteil ist, desto größer ist der Grad der Anonymisierung, jedoch auch die Menge der dafür erzeugten Antwortdaten.

Auf der anderen Seite kann die mathematische Funktion auch derart ausgebildet sein, dass verschiedene Anfrageschlüsselwörter auf verschiedene Zeichenketten abgebildet werden. Dies wird beispielsweise im Zusammenhang mit einer Hashfunktion als mathematische Funktion in der Regel der Fall sein. Gemäß dieser Variante wird dann als Anfragezeichenkette, wie bereits vorstehend beschrieben, ein vorgegebener Anteil der Zeichenkette verwendet. Auf diese Weise kann dann, je nach Länge des ausgewählten Anteils, der Grad der gewünschten Anonymisierung festgelegt werden.

Besonders bevorzugt kann die mathematische Funktion weiterhin eine zufällige Komponente umfassen. Dies hat zur Folge, dass eine für ein Angebotsanfrageschlüsselwort erzeugte Anfragezeichenkette zusätzlich von der Zufallskomponente abhängt und auf diese Weise der Grad der Anonymisierung nochmals deutlich gesteigert werden kann.

Um dem Anfrageempfänger ein Erzeugen der Antwortdaten zu ermöglichen, muss die verallgemeinerte Angebotsanfrageinformation zusätzlich zu der Anfragezeichenkette die zufällige Komponente oder eine die zufällige Komponente definierende Angabe umfassen. Der Anfragesteller kann dann durch Anwendung der mathematischen Funktion unter Zuhilfenahme der zufälligen Komponente auf Einträge in der Angebotsinformationsdatenbank eine Datenbasis erzeugen, welche hinsichtlich der Anfragezeichenkette zu durchsuchen ist, um Antwortdaten zu erzeugen.

Gemäß einer weiteren bevorzugten Ausführungsform speichert die dritte Instanz, d.h. der Betreiber des Mobilfunknetzes, von dem Anfrageempfänger in Antwort auf gesendete Globalanfrageinformationen empfangene Antwortdaten zusammen mit den Globalanfrageinformationen. Beim Empfang aktualisierter Detailanfrageinformationen, beispielsweise in Form aktualisierter Ortsanfrageinformationen, von dem Anfragesteller prüft die dritte Instanz, ob die aktualisierten Detailanfrageinformationen noch von den gespeicherten Globalanfrageinformationen, beispielsweise einem gespeicherten Ortsbereich, umfasst sind.

In dem Fall, dass die aktualisierten Detailanfrageinformationen noch von den gespeicherten Globalanfrageinformationen umfasst sind, kann die dritte Instanz die zusammen mit den Globalanfrageinformationen gespeicherten Antwortdaten mit Blick auf die aktualisierten Detailanfrageinformationen auswerten und hinsichtlich der aktualisierten Detailanfrageinformation relevante Antwortdaten an den Anfragesteller weiterleiten. Es ist dann nicht notwendig, die gesamten Globalanfrageinformationen an den Anfrageempfänger zu senden und entsprechende Antwortdaten abzuwarten, welche von dem bereits gespeicherten nicht abweichen würden. Das Verfahren wird dadurch wesentlich vereinfacht, da ein Großteil der ansonsten anzustellenden Berechnungen und Datenübertragungen verzichtbar sind.

Eine stationäre Einheit, beispielsweise eine entsprechende Einrichtung des Betreibers eines Mobilfunknetzes, umfasst eine Datenkommunikationsschnittstelle zu dem Mobilfunknetz, welche dem Empfangen von Detailanfrageinformationen und/oder Globalanfrageinformationen dient sowie dem Weiterleiten von Antwortdaten an den Anfragesteller. Weiterhin umfasst die stationäre Einheit eine Datenkommunikationsschnittstelle zu einem Kommunikationsnetzwerk, beispielsweise dem Internet. Diese Schnittstelle dient zum Senden von Globalanfrageinformationen zu und zum Empfangen von Antwortdaten von dem Anfrageempfänger. Eine Speichereinrichtung dient der stationären Einheit insbesondere zum Speichern von Globalanfrageinformationen und entsprechenden Antwortdaten. Eine Anfrageinformationsverarbeitungseinrichtung der stationären Einheit ist eingerichtet, Globalanfrageinformationen zu bilden und weiterzuleiten sowie gegebenenfalls zumindest einen Anteil der Antwortdaten hinsichtlich Relevanz für die vorliegenden Detailanfrageinformationen auszuwerten. Mit anderen Worten ist die stationäre Einheit insbesondere eingerichtet, ein vorstehend beschriebenes Verfahren in der Rolle der dritten Instanz durchzuführen, über welche eine Datenkommunikation zwischen dem Anfragesteller und dem Anfrageempfänger durchgeführt wird.

Ein Anfrageverarbeitungssystem, welches eingerichtet ist, ein vorstehend beschriebenes Verfahren in der Rolle des Anfrageempfängers durchzuführen und daher einem Betreiber des ortsbezogenen Dienstes zugeordnet werden kann, umfasst in der Regel eine Datenkommunikationsschnittstelle zu einem Kommunikationsnetzwerk, beispielsweise dem Internet, zum Empfangen von Anfrageinformationen von der dritten Instanz und zum Senden von Antwortdaten an die dritte Instanz. Weiterhin umfasst das Anfrageverarbeitungssystem eine Anfrageverarbeitungseinrichtung zum Verarbeiten empfangener Anfrageinformationen und zum Erzeugen entsprechender Antwortdaten.

Ein mobiles Endgerät, welches eingerichtet ist, ein Verfahren der beschriebenen Art in der Rolle des Anfragestellers durchzuführen, umfasst zumindest eine Datenkommunikationsschnittstelle zu einem Mobilfunknetz zum Senden von Detailanfrageinformationen und gegebenenfalls von Globalanfrageinformationen an die dritte Instanz. Weiterhin umfasst das mobile Endgerät in der Regel eine Speichereinrichtung sowie eine Einrichtung zum Erstellen von Detailanfrageinformationen.

Ein dem beschriebenen Verfahren zu Grunde liegendes System umfasst daher zumindest ein Anfrageverarbeitungssystem wie ein mobiles Endgerät sowie bevorzugt zumindest eine stationäre Einheit der beschriebenen Art.

Die vorliegende Erfindung wird im Folgenden mit Bezug auf die beiliegenden Zeichnungen beispielhaft beschrieben. Darin zeigen:
- Figur 1: schematisch verschiedene Komponenten einer bevorzugten Ausführungsform eines erfindungsgemäßen Systems und
- Figuren 2A und 2B: Schritte einer bevorzugten Ausführungsform eines erfindungsgemäßen Verfahrens.

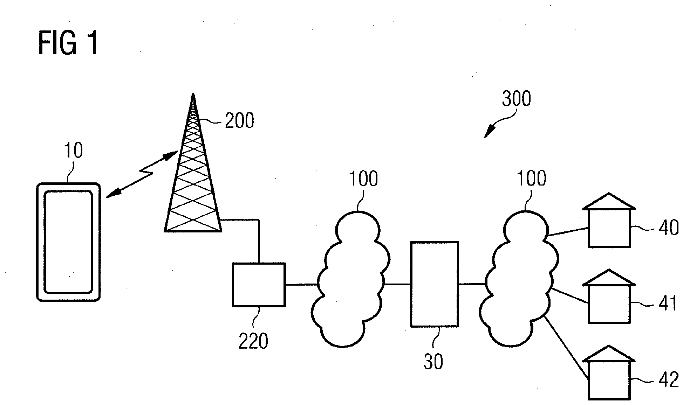

Wie in Figur 1 schematisch dargestellt, umfasst ein System 300 zum Ausführen eines Verfahrens zum Bereitstellen von Antwortdaten im Rahmen eines ortsbezogenen Dienstes verschiedene Komponenten.

Die Funktionalitäten des ortsbezogenen Dienstes werden durch ein Anfrageverarbeitungssystem 30 bereitgestellt, welches in nachstehend beschriebener Weise eingerichtet ist, Anfrageinformationen über eine dritte Instanz 220 zu empfangen und zu verarbeiten und auf die Anfrage zutreffende Antwortdaten zu erzeugen und - wiederum über die dritte Instanz 220 - dem Anfragesteller 10 bereitzustellen.

Die dritte Instanz 220 ist ein Betreiber eines Mobilfunknetzes 200, über welches eine Datenkommunikation zwischen dem Anfragesteller 10 und dem Anfrageempfänger 30 zumindest teilweise durchgeführt wird, d.h. zumindest die Datenübertragung zwischen dem Anfragesteller 10 und der dritten Instanz 220 wird über das Mobilfunknetz 200 erfolgen. Der Betreiber 220 des Mobilfunknetzes kann dann mit dem ortsbezogenen Dienst, d.h. dem Anfrageverarbeitungssystem 30, über ein geeignetes Kommunikationsnetzwerk 100, insbesondere über das Internet, kommunizieren. Auf diese Weise können auch große Datenmengen zwischen dem Betreiber 220 und dem Anfrageverarbeitungssystem 30 einfach, kostengünstig und schnell übertragen werden.

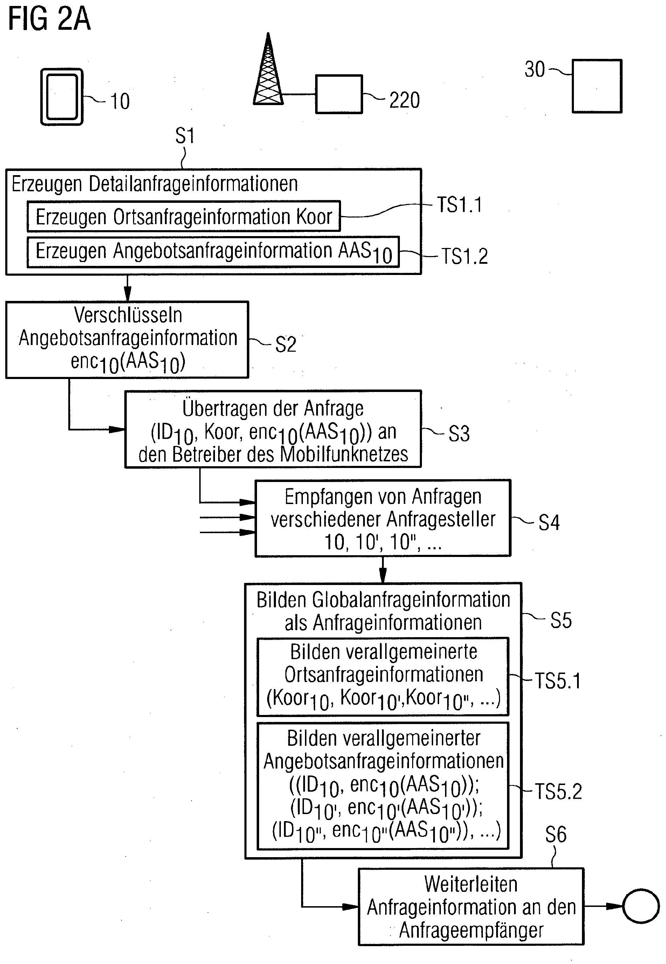

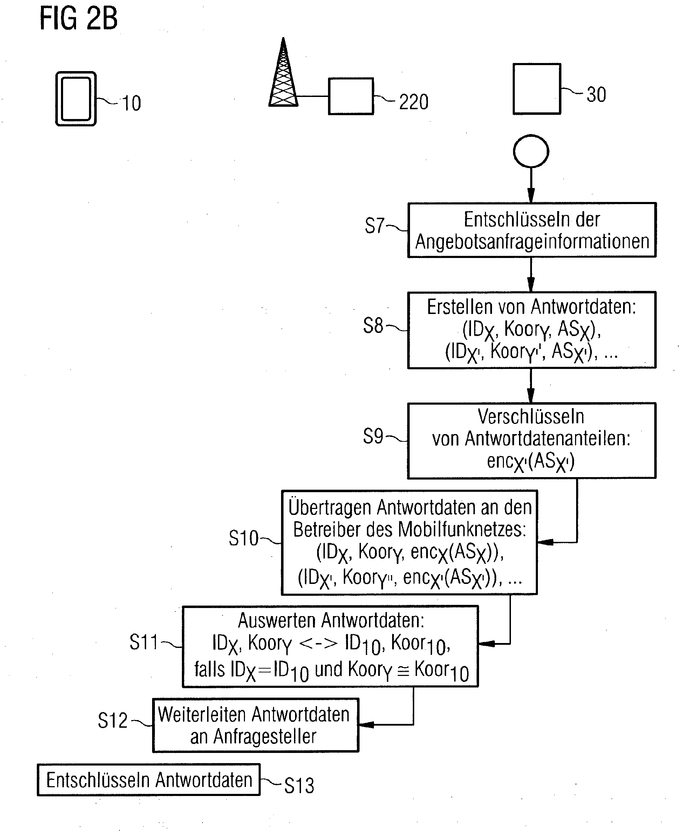

Die Funktionalitäten der dritten Instanz 220 werden nachfolgend mit Bezug auf die Figuren 2A und 2B im Detail beschrieben.

Der Anfragesteller 10 kann den ortsbezogenen Dienst mittels eines mobilen Endgeräts 10 verwenden. Das mobile Endgerät 10 umfasst insbesondere eine Einrichtung zum Erstellen nachfolgend genauer beschriebener Anfragedaten sowie gegebenenfalls Einrichtungen zum Ver- und Entschlüsseln von Anteilen der Anfragedaten und entsprechender Antwortdaten. schließlich kann das Endgerät 10 eine Einrichtung zum zumindest teilweisen Auswerten von Antwortdaten umfassen. Details entsprechender Verfahrensschritte werden mit Bezug auf die Figuren 2A und 2B beschrieben.

Die Produkte und Dienstleistungen, über welche der ortsbezogene Dienst 30 einen lokalen Anfragesteller 10 im Rahmen des ortsbezogenen Dienstes informieren kann, werden von verschiedenen Angebotsanbietern 40, 41, 42 bereitgestellt. Angebotsanbieter 40, 41, 42 sind dabei insbesondere alle Arten von Einzelhandelsgeschäften oder Supermärkten, Restaurants, Tankstellen, Kultureinrichtungen, Parkhäuser oder dergleichen.

Die Angebotsanbieter 40, 41, 42 können ebenfalls, beispielsweise über das Internet, mit dem Dienst 30, d.h. dem Anfrageverarbeitungssystem 30, verbunden sein, insbesondere um Ortsinformationen und Angebotsinformationen in der im einleitenden Teil der Beschreibung beschriebenen Weise bereitzustellen.

Wesentliche Schritte eines Verfahrens zum Bereitstellen von Antwortdaten im Rahmen eines ortsbezogenen Dienstes werden nachfolgend mit Bezug auf die Figuren 2A und 2B beschrieben.

In Schritt S1 erstellt der Anfragesteller 10 die Anfrage definierende Detailanfrageinformationen. Dabei werden insbesondere in Teilschritt TS1.1 Ortsanfrageinformationen erstellt, in Teilschritt TS1.2 werden Angebotsanfrageinformationen erstellt. Die Ortsanfrageinformationen beschreiben die Anfrage dahingehend, an welchem Ort ein durch die Angebotsanfrageinformation angegebenes Produkt oder eine angegebene Dienstleistung seitens des Anfragestellers 10 nachgefragt wird. In der Regel wird die Ortsanfrageinformation Koor₁₀ den momentanen Standort des Anfragestellers 10 angeben. Ein solcher Standort kann in bekannter Weise mittels eines Lokalisationsdienstes, beispielsweise auf Basis von GPS, WLAN oder dergleichen, mittels des mobilen Endgeräts 10 des Anfragestellers 10 ermittelt werden.

Die Angebotsanfrageinformationen können beispielsweise eine Liste von Produkten oder Dienstleistungen umfassen, welche auch als Wunschliste des Anfragestellers 10 bezeichnet wird. Im Zusammenhang mit dem vorliegend beschriebenen Ausführungsbeispiel wird als Angebotsanfrageinformation ein Angebotsanfrageschlüsselwort AAS₁₀ angenommen. Ein solches Schlüsselwort AAS₁₀ dient dazu, eine Anfrage knapp und präzise zu definieren.

In Schritt S2 verschlüsselt der Anfragesteller 10 die Angebotsanfrageinformation, bevor diese zusammen mit der Ortsanfrageinformationen an den Betreiber 220 des Mobilfunknetzes 200 übertragen wird. Das Verschlüsseln der Angebotsanfrageinformation dient dazu, diese vor dem Betreiber 220 zu verbergen oder zu verschleiern. Auf diese Weise kann der Betreiber 220 des Mobilfunknetzes 200 kein Profil des Anfragestellers 10 hinsichtlich dessen Produktwünschen erstellen.

Die Verschlüsselung erfolgt dabei derart, dass der ortsbezogene Dienst, das heißt das Anfrageverarbeitungssystem 30, in der Lage ist, die verschlüsselten Angebotsanfrageinformationen wieder zu entschlüsseln. Eine Verschlüsselung kann beispielsweise mittels eines öffentlichen Schlüssels des ortsbezogenen Dienstes 30 erfolgen. In gleicher Weise ist es möglich, dass der Anfragesteller 10 mit dem ortsbezogenen Dienst 30 einen für den Anfragesteller 10 spezifischen symmetrischen Schlüssel ausgetauscht hat.

In Schritt S3 überträgt der Anfragesteller 10 die die Anfrage spezifizierenden Daten an den Betreiber 220 des Mobilfunknetzes 20. Die Anfragedaten umfassen, zusätzlich zu der Ortsanfrageinformation Koor₁₀ und der verschlüsselten Angebotsanfrageinformation enc(AAS₁₀) noch einen für den Anfragesteller 10 eindeutigen Bezeichner IDio.

In Schritt S4 empfängt der Betreiber 220 des Mobilfunknetzes 200 zusätzlich zu den Anfragedaten des Anfragestellers 10 weitere Anfragedaten anderer, von dem Anfragesteller 10 verschiedener Anfragesteller 10', 10".

In Schritt S5 bildet der Betreiber 220 aus den empfangenen Anfragedaten Globalanfrageinformationen, welche in Schritt S6 an den Anfrageempfänger, das heißt an das Anfrageverarbeitungssystem 30, weitergeleitet werden.

In Teilschritt TS5.1 bildet der Betreiber 220 des Mobilfunknetzes 200 verallgemeinerte Ortsanfrageinformationen in Form einer Liste von Ortsanfrageinformationen. Jede einzelne dieser Ortsanfrageinformationen entspricht einer Ortsanfrageinformation eines konkreten Anfrageerstellers 10, 10', 10". Mit anderen Worten wird der momentane Standort Koor₁₀ eines Anfragestellers 10 dadurch verschleiert oder anonymisiert, dass dieser Standort zusammen mit Standorten Koor_{10'}, Koor_{10"} anderer Anfrageinformationen entsprechender anderer Anfragesteller 10', 10" als verallgemeinerte Ortsanfrageinformation an den Anfrageempfänger 30 gesendet wird.

In Teilschritt TS 5.2 bildet der Betreiber 220 des Mobilfunknetzes 200 in analoger Weise eine Liste von Angebotsanfrageinformationen, welche sich aus den einzelnen verschlüsselten Angebotsanfrageinformationen der verschiedenen Anfragesteller 10, 10', 10" zusammensetzt. Zusammen mit jeder der verschlüsselten Angebotsanfrageinformationen wird der jeweilige Bezeichner ID₁₀ des jeweiligen Anfragestellers 10 mit übertragen. Dies dient im Wesentlichen dazu, dass der Betreiber 220 des Mobilfunknetzes 200 in einem späteren Schritt (Schritt S11) wieder in der Lage ist, von dem Anfrageverarbeitungssystem 30 empfangene Antwortdaten den jeweiligen Anfragestellern 10, 10', 10" zuzuordnen, wie dies nachfolgend noch genauer beschrieben wird. Auch das Anfrageverarbeitungssystem nutzt die Bezeichner ID₁₀ in Schritt S9 zum Auffinden eines einem Anfragesteller 10 zugeordneten Schlüssels.

Vorzugsweise fasst der Betreiber 220 des Mobilfunknetzes 200 immer die gleichen Anfragesteller 10, 10', 10" zu einer Gruppe zusammen, um in der vorstehend beschriebenen Weise Globalanfrageinformationen zu erzeugen. Dadurch ist es für den Anfrageempfänger 30, d.h. den ortbezogenen Dienst, nicht möglich - beispielsweise indirekt mittels Differenzanalyse anhand der Wunschliste eines Anfragestellers 10 - Rückschlüsse auf den Standort des Anfragestellers 10 zu ziehen.

Wie bereits erwähnt, werden die in Schritt S5 gebildeten Globalanfrageinformationen in Schritt S6 als Anfrageinformationen an den Anfrageempfänger 30 weitergeleitet.

Das Anfrageverarbeitungssystem 30 entschlüsselt in Schritt S7 die verschlüsselten Anteile der Anfrageinformationen, das heißt die verschlüsselten Angebotsanfrageinformationen enc(AAS₁₀) der einzelnen Anfragesteller 10.

In Schritt S8 erstellt das Anfrageverarbeitungssystem 30 Antwortdaten. Dabei werden sämtliche Angebote als Antwortdaten erzeugt, welche mit Bezug auf eine Angebotsanfrageinformation und eine Ortsanfrageinformation zutreffen. Es versteht sich, dass auf diese Weise Antwortdaten erzeugt werden, welche auf keine der spezifischen Anfragen der einzelnen Anfragesteller 10, 10', 10" zutreffen, da es dem Anfrageverarbeitungssystem 30 nicht möglich ist, Anfrageortsinformationen und Angebotsanfrageinformationen jeweils einem Anfragesteller 10, 10', 10" zuzuordnen. Dies war aber genau gewollt, um dem Anfrageempfänger 30 das Erstellen eines Nutzerprofiles eines Anfragestellers unmöglich zu machen.

In Schritt S9 verschlüsselt das Anfrageverarbeitungssystem 30 schließlich diejenigen Anteile AS₁₀ der Antwortdaten, welche sich auf die Angebotsanfrageinformation AAS₁₀ beziehen. Mit Bezug auf die beschriebene Ausführungsform wird dieser Anteil als Angebotsschlüsselwort AS₁₀ bezeichnet. Die Verschlüsselung erfolgt dabei in der Weise, dass der jeweilige Anfragesteller die verschlüsselten Daten entschlüsseln kann. Die Auswahl des richtigen Schlüssels, z.B. eines dem Anfragesteller 10 zugeordneten öffentlichen Schlüssels oder eines zuvor mit dem Anfragesteller 10 ausgetauschten symmetrischen Schlüssels, wird dem Anfrageverarbeitungssystem 30 dadurch ermöglicht, dass zusammen mit den verschlüsselten Angebotsanfrageinformationen in Schritt S3 auch ein eindeutiger Bezeichner ID₁₀ des Anfragestellers 10 übermittelt worden ist.

Die derart verschlüsselten Antwortdaten (ID_{X}, Koor_{Y}, enc(AS_{X})) werden von dem Anfrageverarbeitungssystem 30 in Schritt S10 an den Betreiber 220 des Mobilfunknetzes 200 übertragen. Der Index "X" meint hierbei einen der Anfragesteller 10, 10', 10". Mit Koory wird ein Standort bezeichnet, welcher einem Standort eines der Anfragesteller 10, 10', 10" entspricht, ohne dass das Anfrageverarbeitungssystem 30 erkennen könnte, welcher Anfragesteller 10, 10', 10" hier betroffen ist.

Der Betreiber 220 des Mobilfunknetzes 200 wertet in Schritt S11 die empfangenen Antwortdaten aus. Dabei werden Antwortdaten, welche einen Bezeichner ID_{X} und Koordinaten Koory aufweisen, genau dann einem Anfragesteller 10 zugeordnet, wenn der Anfragesteller 10 den Bezeichner IDx besitzt und eine Ortsanfrageinformation Koono übermittelt hat, die in unmittelbarer Umgebung der Ergebniskoordinaten Koor_{Y} liegt. Auf diese Weise kann der Betreiber 220 des Mobilfunknetzes 200 die Antwortdaten hinsichtlich der Ortsanfrageinformationen eindeutig einem Anfragesteller 10 zuordnen, ohne dass die Angebotsanfrageinformationen betreffende Anteile der Antwortdaten AS₁₀ ausgewertet werden müssen - welche für den Betreiber 220 wegen der Verschlüsselung ohnehin nicht lesbar sind.

In Schritt S12 leitet der Betreiber 220 des Mobilfunknetzes 200 die jeweiligen Antwortdaten (ID₁₀, Koor₁₀, enc(AS₁₀)) an den Anfragesteller 10 weiter, weleher diese in Schritt S13 entschlüsselt und gegebenenfalls hinsichtlich der Anteile, welche die Angebotsanfrageinformation betreffen, weiter auswertet.

Mit Bezug auf die nachfolgende Tabelle 1 wird eine alternative Variante beschrieben, mittels derer der Anfragesteller 10 verhindern kann, dass die dritte Instanz, d.h. der Betreiber 220 des Mobilfunknetzes 200, Angebotsanfrageinformationen eindeutig dem Anfragesteller 10 zuordnen kann.

Grundsätzlich geschieht dies dadurch, dass der Anfragesteller 10 die Angebotsanfrageinformationen nicht in Form von Detailanfrageinformationen an den Betreiber 220 übermittelt, sondern selbst bereits entsprechende, die Angebotsanfrageinformation - zumindest implizit - umfassende verallgemeinerte Angebotsanfrageinformationen erzeugt und diese an den Betreiber 220 übermittelt.

**Tabelle 1**

| | Angebotsanfrageinformation: Angebotsanfrageschlüsselwort AAS | verallgemeinerte Angebotsanfrageinformation: Kategorie |
|---|---|---|
| a) | "Vollkornbrot" | "Backwaren" |
| b) | "Vollkornbrot" | {"Vollkornbrot", "Schnürsenkel", "Wurst"} |
| c) | "Vollkornbrot" | F("Vollkornbrot") = 14ae023fb2897ec7a500c36b69080d44 F( ) = md5 |
| d) | "Vollkornbrot" | Anfangsanteil₇ (F("Vollkornbrot")) = 14ae023 |
| e) | "Vollkornbrot" | F("Vollkornbrot", 123) = 5a20ab74959a6cf25c6270585a12c829 123 = Zufallszahl |
| f) | "Vollkornbrot" | Endanteil₄(F("Vollkornbrot", 123)) = c829 |

Mit Bezug auf Tabelle 1 wird jeweils angenommen, dass die Angebotsanfrageinformation in Form eines Angebotsanfrageschlüsselwortes AAS vorliegt, im Beispiel das Schlüsselwort "Vollkornbrot". Die verallgemeinerte Angebotsanfrageinformation ist jeweils durch eine Kategorie dargestellt. Diese Kategorie ist derart ausgebildet, dass eine Mehrzahl von Angebotsanfrageschlüsselwörtern in diese Kategorie fällt.

Dadurch, dass der Betreiber 220 des Mobilfunknetzes 200 lediglich die Kategorie, nicht aber das konkrete Angebotsanfrageschlüsselwort sieht, kann er kein konkretes Profil des Anfragestellers 10 hinsichtlich dessen Produkt- und Dienstleistungswünschen erstellen.

Gemäß einer ersten Variante, wie in der Tabelle unter a) angegeben, kann eine Kategorie dadurch gebildet werden, dass anstelle des Angebotsanfrageschlüsselwortes ein verallgemeinertes Angebotsanfrageschlüsselwort gewählt wird, welches einen semantischen Oberbegriff des Angebotsanfrageschlüsselwortes bildet, mit Bezug auf das Schlüsselwort "Vollkornbrot" beispielsweise der Oberbegriff "Backwaren".

Gemäß einer zweiten Variante, wie in der Tabelle unter b) angegeben, kann eine Kategorie dadurch gebildet werden, dass eine Mehrzahl verschiedener, grundsätzlich beliebig wählbarer Angebotsanfrageschlüsselwörter zusammengefasst werden. Insbesondere muss zwischen diesen zusammengefassten Angebotsanfrageschlüsselwörtern keinerlei inhaltliche Beziehung bestehen.

Gemäß einer in der Tabelle nicht dargestellten, jedoch mit Bezug auf Figur 2 bereits beschriebenen Variante, kann eine Kategorie dadurch gebildet werden, dass Angebotsanfrageschlüsselwörter verschiedener Anfragesteller 10, 10', 10" zu einer Kategorie zusammengefasst werden.

Gemäß einer in der Tabelle unter c) dargestellten dritten Variante kann eine einem Angebotsanfrageschlüsselwort zugeordnete Kategorie eine Anfragezeichenkette umfassen. Diese Zeichenkette ergibt sich dabei durch Anwendung einer mathematischen Funktion auf das Angebotsanfrageschlüsselwort. Vorzugsweise wird dazu eine mathematische Einwegfunktion verwendet. In dem unter c) dargestellten Beispiel ist das Angebotsanfrageschlüsselwort "Vollkornbrot" der bekannten Hashfunktion MD5 unterzogen worden.

Wie in der Tabelle unter d) dargestellt, kann eine Zeichenkette, welche durch Anwendung einer mathematischen Funktion auf ein Angebotsanfrageschlüsselwort gebildet wird, lediglich teilweise verwendet werden, um eine Anfragezeichenkette zu erzeugen. Beispielsweise kann lediglich ein Anfangsanteil einer Zeichenkette verwendet werden, beispielsweise die ersten sieben Stellen. In gleicher Weise ist es möglich, beispielsweise einen Endabschnitt einer Zeichenkette als Anfragezeichenkette zu verwenden, wie dies mit Bezug auf Punkt f) in Tabelle 1 angedeutet ist.

Die Funktion zum Bilden der Anfragezeichenkette bzw. das Auswählen eines Anteils einer sich durch Anwendung der Funktion ergebenden Zeichenkette wird dabei so gewählt, dass stets mehrere verschiedene Angebotsanfrageschlüsselwörter auf dieselbe Anfragezeichenkette abgebildet werden, um so eine gewünschte Kategorienbildung zu ermöglichen.

Je kürzer die Anfragezeichenkette gewählt wird, desto größer ist die entstehende Kategorie und desto stärker ist die erreichbare Anonymisierung. Allerdings wächst mit der Größe der Kategorie auch die Menge der dafür erzeugten Antwortdaten, welche dann ausgewertet werden müssen.

In dem Anfrageverarbeitungssystem 30 werden den Angebotsanfrageschlüsselwörtern entsprechende Angebotsschlüsselwörter, welche die vorliegenden Angebote spezifizieren, in entsprechender Weise der mathematischen Funktion unterzogen und in Form von Angebotszeichenketten zu einer angepassten Datenbasis zusammengestellt, welche dann durchsucht wird, um der Anfragezeichenkette entsprechende Ergebnisse zu erzeugen.

Gemäß einer weiteren Variante, welche in der Tabelle unter e) angedeutet ist, kann beim Bilden der Zeichenkette durch Anwendung der mathematischen Funktion weiterhin ein Zufallsdatum, z.B. eine Zufallszahl, eingehen. Mit Bezug auf eine Hash-Funktion als mathematische Funktion kann das Zufallsdatum beispielsweise ein Schlüssel eines "Secure Hash" sein, mit Bezug auf einen CRC-Prüfwert als mathematische Funktion kann ein verwendeter Initialwert als Zufallsdatum dienen.

Auf diese Weise kann die Anonymisierung der Anfrage weiter verstärkt werden, da ein und dasselbe Angebotsanfrageschlüsselwort, abhängig von dem Zufallsdatum, im Rahmen nachfolgender Anfragen auf andere Anfragezeichenketten abgebildet wird. Um dem Anfrageverarbeitungssystem 30 ein Erzeugen von Antwortdaten zu ermöglichen, ist es gemäß dieser Variante erforderlich, zusammen mit der Anfragezeichenkette das Zufallsdatum mit zu übermitteln, um dem Anfrageverarbeitungssystem 30 zu ermöglichen, Einträge in der Angebotsinformationsdatenbank analogen Transformationen zu unterziehen, d.h. Zeichenketten zu erstellen, welche nicht nur von der mathematischen Funktion, sondern auch von dem spezifischen Zufallsdatum abhängig sind.

Mit Bezug auf Figur 2A kann dann dort der Schritt S2 des Verschlüsselns der Angebotsanfrageinformationen entfallen und durch einen Schritt des Erstellens der verallgemeinerten Angebotsanfrageinformation, d.h. des Erstellens einer verschleiernden Kategorie, ersetzt werden.

Entsprechend entfällt auf Seiten des Anfrageverarbeitungssystems 30 der Schritt S7 (vgl. Fig. 2B) des Entschlüsselns der Angebotsanfrageinformation.

Anstelle dieses Schrittes kann ein Schritt des Bildens entsprechender Zeichenketten treten, welche Angebotsschlüsselwörter, die in der Angebotsinformationsdatenbank des Anfrageverarbeitungssystem 30 vorliegen, in einer Weise repräsentieren, wie die Anfragezeichenketten die Angebotsanfrageschlüsselwörter des Anfragestellers 10 repräsentieren.

Schließlich wird der Anfragesteller 10 anstelle des Entschlüsseln eines Anteils der Antwortdaten in Schritt S13 (vgl. Fig. 2B) die Antwortdaten selbst noch hinsichtlich der verallgemeinerten Angebotsanfrageinformation auswerten müssen, das heißt der Anfragesteller muss aus denjenigen Antwortdaten, welche die gesamte Kategorie betreffen, diejenigen herausfiltern, die für das ursprüngliche Angebotsanfrageschlüsselwort zutreffen.

## Patentansprüche

1. Verfahren zum Bereitstellen von Antwortdaten im Rahmen eines ortsbezogenen Dienstes, wobei ein Anfragesteller (10) eine mittels einer Anfrageinformation definierbare Anfrage an einen Anfrageempfänger sendet (S3) und der Anfrageempfänger in Antwort auf die Anfrage hinsichtlich der Anfrageinformation passende Antwortdaten bereitstellt (S10), wobei
- die Anfrage durch Detailanfrageinformationen definiert wird (S1), welche eine Ortsanfrageinformation (Koor₁₀) und eine Angebotsanfrageinformation (AAS₁₀) umfassen;
- Globalanfrageinformationen derart gebildet werden (S5), dass die Globalanfrageinformationen die Detailanfrageinformationen umfassen, wobei die Globalanfrageinformationen eine die Ortsanfrageinformation (Koor₁₀) umfassende verallgemeinerte Ortsanfrageinformation (Koor₁₀, Koor_{10'}, Koor_{10"}) umfassen;
- die Globalanfrageinformationen als Anfrageinformation an den Anfrageempfänger (30) gesendet werden (S6) und
- die von dem Anfrageempfänger (30) empfangenen Antwortdaten hinsichtlich Relevanz für die Detailanfrageinformationen ausgewertet werden (S11),
wobei die verallgemeinerte Ortsanfrageinformation von einer dritten Instanz (220) erzeugt wird, wobei
- die dritte Instanz (220) ein Betreiber eines Mobilfunknetzes (200) ist, über welches eine Datenkommunikation zwischen dem Anfragesteller (10) und dem Anfrageempfänger (30) durchgeführt wird, und wobei
- als Ortsanfrageinformation (Koor₁₀) eine momentane Position des Anfragestellers (10) vorliegt, wobei die verallgemeinerte Ortsanfrageinformation zusätzlich zu der momentanen Position des Anfragestellers weitere momentane Positionen (Koor₁₀' , Koor₁₀") anderer, von dem Anfragesteller (10) verschiedener Anfragesteller (10', 10") umfasst,
- die Globalanfrageinformationen eine die Angebotsanfrageinformation (AAS₁₀) umfassende verallgemeinerte Angebotsanfrageinformation (AAS₁₀, AAS_{10'}, AAS_{10"}) umfassen,
- die Angebotsanfrageinformationen (AAS₁₀) in verschlüsselter Form von dem Anfragesteller (10) an den Anfrageempfänger übertragen werden, dass die dritte Instanz (220) dem Anfragesteller (10) keine Angebotsanfrageinformation (AAS₁₀) eindeutig zuordnen kann,
wobei die Detailanfrageinformation eine Angebotsanfrageinformation (AAS₁₀) in Form eines Angebotsanfrageschlüsselwortes umfasst und dass die verallgemeinerte Angebotsanfrageinformation (AAS₁₀, AAS_{10'}, AAS_{10"}) zusätzlich zu dem Angebotsanfrageschlüsselwort eine Mehrzahl verschiedener Schlüsselwörter umfasst, wobei die Mehrzahl verschiedener Schlüsselwörter, die zu dem Angebotsanfrageschlüsselwort hinzugefügt werden, um die verallgemeinerte Angebotsanfrageinformation zu bilden, Anfrageschlüsselwörtern anderer, von dem Antragsteller (10) verschiedener Antragsteller (10'; 10") entsprechen, 11
wobei die Antwortdaten hinsichtlich der Angebotsanfrageinformationen von dem Anfragesteller (10) ausgewertet werden.

2. Verfahren nach Anspruch 1, **dadurch gekennzeichnet, dass** die Detailanfrageinformation eine Angebotsanfrageinformation (AAS₁₀) in Form eines Angebotsanfrageschlüsselwortes umfasst und dass die verallgemeinerte Angebotsanfrageinformation eine Anfragezeichenkette umfasst, welche aus einer Anwendung einer mathematischen Funktion auf das Schlüsselwort abgeleitet wird.

3. Verfahren nach Anspruch 2, **dadurch gekennzeichnet, dass** die mathematische Funktion derart ausgebildet ist, dass verschiedene Anfrageschlüsselwörter auf dieselbe Zeichenkette abgebildet werden, wobei als Anfragezeichenkette die Zeichenkette verwendet wird.

4. Verfahren nach Anspruch 2, **dadurch gekennzeichnet, dass** die mathematische Funktion derart ausgebildet ist, dass verschiedene Anfrageschlüsselwörter auf verschiedene Zeichenketten abgebildet werden, wobei als Anfragezeichenkette ein vorgegebener Anteil der Zeichenkette verwendet wird.

5. Verfahren nach einem der Ansprüche bis 4, **dadurch gekennzeichnet, dass** die mathematische Funktion eine zufällige Komponente umfasst, wobei die verallgemeinerte Angebotsanfrageinformation zusätzlich zu der Anfragezeichenkette eine die zufällige Komponente definierende Angabe umfasst.

6. System (300), umfassend ein Anfrageverarbeitungssystem, zumindest ein mobiles Endgerät sowie einen Betreiber eines Mobilfunknetzes (200),
wobei das Anfrageverarbeitungssystem eingerichtet ist, ein Verfahren nach einem der Ansprüche 1 bis 5 in der Rolle des Anfrageempfängers (30) durchzuführen,
wobei das zumindest ein mobile Endgerät eingerichtet ist, ein Verfahren nach einem der Ansprüche 1 bis 5 in der Rolle des Anfragestellers (10) durchzuführen
und der Betreiber eines Mobilfunknetzes (200),welcher eingerichtet ist, ein Verfahren nach einem der Ansprüche 1 bis 5 5 in der Rolle der dritten Instanz (220) durchzuführen.

## Claims

1. A method for supplying response data in the context of a location-based service, wherein a requester (10) sends (S3) a request definable by means of a request information item to a request receiver and the request receiver in response to the request provides (S10) response data which is appropriate with regard to the request information item, in which
- the request is defined (S1) by detail request information items, which comprise a location request information item (Koor₁₀) and an offer request information item (AASio);
- global request information items are formed (S5) such that the global request information items comprise the detail request information items, wherein the global request information items comprise a generalized location request information item (Koor₁₀, Koor_{10'}, Koor₁₀") comprising the location request information item (Koor₁₀);
- the global request information items are sent (S6) to the request receiver (30) as a request information item and
- the response data received by the request receiver (30) is evaluated (S11) with regard to relevance to the detail request information items,
wherein the generalized location request information item is generated by a third instance (220), wherein
- the third instance (220) is an operator of a mobile radio network (200) via which a data communication is carried out between the requester (10) and the request receiver (30), and wherein
- a current position of the requester (10) is present as a location request information item (Koorio), wherein the generalized location request information item comprises, in addition to the current position of the requester, further current positions (Koor_{10'}, Koor_{10"}) of other requesters (10', 10") different from the requester (10),
- the global request information items comprise a generalized offer request information item (AAS₁₀, AAS_{10'}, AAS_{10"}) comprising the offer request information item (AAS₁₀),
- the offer request information item (AAS₁₀) is transmitted in encrypted form from the requester (10) to the request receiver in such a way that the third instance (220) cannot unambiguously associate an offer request information item (AAS₁₀) with the requester (10), wherein the detail request information item comprises an offer request information item (AAS₁₀) in the form of an offer request keyword and that the generalized offer request information item (AAS₁₀, AAS_{10'}, AAS_{10"}) comprises, in addition to the offer request keyword, a plurality of different keywords, wherein the plurality of different keywords, which are added to the offer request keyword to form the generalized offer request information item, correspond to request keywords of other requesters (10'; 10") different from the requester (10),
wherein the response data are evaluated by the requester (10) with regard to the offer request information items.

2. The method according to claim 1, **characterized in that** the detail request information item comprises an offer request information item (AAS₁₀) in the form of an offer request keyword and that the generalized offer request information item comprises a request character string which is derived from an application of a mathematical function to the keyword.

3. The method according to claim 2, **characterized in that** the mathematical function is designed such that different request keywords are mapped to the same character string, wherein the character string is used as a request character string.

4. The method according to claim 2, **characterized in that** the mathematical function is designed such that different request keywords are mapped to different character strings, wherein a predetermined proportion of the character string is used as a request character string.

5. The method according to any one of claims 2 to 4, **characterized in that** the mathematical function comprises a random component, wherein the generalized offer request information item comprises, in addition to the request character string, an specification defining the random component.

6. A system (300), comprising a request processing system, at least one mobile end device as well as an operator of a mobile radio network (200),
wherein the request processing system is devised to carry out a method according to any of claims 1 to 5 in the role of the request receiver (30),
wherein the at least one mobile end device is devised to carry out a method according to any of claims 1 to 5 in the role of the requester (10)
and the operator of a mobile radio network (200) who is devised to carry out the method according to any of claims 1 to 5 in the role of the third instance (220).

## Revendications

1. Procédé de mise à disposition de données de réponse dans le cadre d'un service de géolocalisation, cependant qu'un envoyeur de demande (10) envoie (S3) à un récepteur de demande une demande définissable par une information de demande et que le récepteur de demande, en réponse à la demande, met à disposition (S10) des données de réponse appropriées quant à l'information de demande, cependant que
- la demande est définie (S1) par des informations de demande de détail, lesquelles comprennent une information de demande de localisation (Koor₁₀) et une information de demande d'offre (AAS₁₀) ;
- des informations de demande globale sont constituées (S5) de telle façon que les informations de demande globale comprennent les informations de demande détaillée, cependant que les informations de demande globale comprennent une information de demande de localisation (Koor₁₀, Koor_{10'}, Koor_{10"}) généralisée comprenant l'information de demande de localisation (Koono) ;
- les informations de demande globale sont envoyées (S6) en tant qu'information de demande au récepteur de demande (30) et
- les données de réponse reçues par le récepteur de demande (30) sont évaluées (S11) quant à leur pertinence pour les informations de demande de détail,
cependant que l'information de demande de localisation généralisée est générée par une troisième instance (220),
cependant que
- la troisième instance (220) est un opérateur de réseau de téléphonie mobile (200) par l'intermédiaire duquel une communication de données entre l'envoyeur de demande (10) et le récepteur de demande (30) est effectuée, et cependant que
- en tant qu'information de demande de localisation (Koor₁₀), il y a une position momentanée de l'envoyeur de demande (10), cependant que l'information de demande de localisation généralisée comprend, en plus de la position momentanée de l'envoyeur de demande, d'autres positions momentanées (Koor_{10'}, Koor_{10"}) d'autres envoyeurs de demande (10', 10"), différents de l'envoyeur de demande (10),
- les informations de demande de localisation globale comprennent une information de demande d'offre (AAS₁₀, AAS_{10'}, AAS_{10"}) généralisée comprenant l'information de demande d'offre (AAS₁₀),
- les informations de demande d'offre (AAS₁₀) sont transmises sous forme cryptée de l'envoyeur de demande (10) au récepteur de demande, de sorte que la troisième instance (220) ne peut, à l'envoyeur de demande (10), affecter univoquement aucune information de demande d'offre (AAS₁₀),
cependant que l'information de demande de détail comprend une information de demande d'offre (AAS₁₀) sous forme d'un mot-clé de demande d'offre, et que l'information de demande d'offre (AAS₁₀, AAS_{10'}, AAS_{10"}) généralisée comprend en plus du mot-clé de demande d'offre une pluralité de mots-clés différents, cependant que la pluralité de mots-clés différents ajoutés au mot-clé de demande d'offre pour constituer l'information de demande d'offre généralisée correspondent à des mots-clés de demande d'autres envoyeurs de demande (10' ; 10"), différents de l'envoyeur de demande (10),
cependant que les données de réponse sont évaluées quant aux informations de demande d'offre de l'envoyeur de demande (10).

2. Procédé selon la revendication 1, **caractérisé en ce que** l'information de demande de détail comprend une information de demande d'offre (AAS₁₀) sous forme d'un mot-clé de demande d'offre, et que l'information de demande d'offre généralisée comprend une chaîne de caractères de demande déduite à partir d'une application d'une fonction mathématique sur le mot-clé.

3. Procédé selon la revendication 2. **caractérisé en ce que** la fonction mathématique est conçue de telle façon que différents mots-clés de demande sont représentés sur la même chaîne de caractères, cependant que, comme chaîne de caractères de demande, la chaîne de caractères est utilisée.

4. Procédé selon la revendication 2, **caractérisé en ce que** la fonction mathématique est conçue de telle façon que différents mots-clés de demande sont représentés sur différentes chaînes de caractères, cependant que, comme chaîne de caractères de demande, une partie prédéterminée de la chaîne de caractères est utilisée.

5. Procédé selon une des revendications de 2 à 4, **caractérisé en ce que** la fonction mathématique comprend un composant aléatoire, cependant que l'information de demande d'offre généralisée comprend, en plus de la chaîne de caractères de demande, une indication définissant le composant aléatoire.

6. Système (300) comprenant un système de traitement de demandes, au moins un terminal mobile ainsi qu'un opérateur d'un réseau de téléphonie mobile (200),
cependant que le système de traitement de demandes est équipé pour effectuer un procédé selon une des revendications de 1 à 5 dans le rôle du récepteur de demande (30),
cependant que le au moins un terminal mobile est équipé pour effectuer un procédé selon une des revendications de 1 à 5 dans le rôle de l'envoyeur de demande (10)
et l'opérateur d'un réseau de téléphonie mobile (200) est équipé pour effectuer un procédé selon une des revendications de 1 à 5 dans le rôle de la troisième instance (220).
